Europäisches Patentamt

European Patent Office

Office européen des brevets

(11) Veröffentlichungsnummer: **0 342 515**
**A2**

## (12) EUROPÄISCHE PATENTANMELDUNG

(21) Anmeldenummer: 89108448.5

(22) Anmeldetag: 11.05.89

(51) Int. Cl.⁴: **F04D 19/04 , F04D 29/06**

(30) Priorität: 20.05.88 DE 3817290

(43) Veröffentlichungstag der Anmeldung:
23.11.89 Patentblatt 89/47

(84) Benannte Vertragsstaaten:
**CH DE FR GB IT LI NL**

(71) Anmelder: **LEYBOLD AKTIENGESELLSCHAFT**
**Bonner Strasse 498**
**D-5000 Köln 51(DE)**

(72) Erfinder: **Schneider, Helmut**
**Frankengraben 20**
**D-5352 Zülpich(DE)**
Erfinder: **Deters, Ludger, Dr.**
**Schillerstrasse 31**
**D-5630 Remscheid 11(DE)**

(74) Vertreter: **Leineweber, Jürgen, Dipl.-Phys.**
**Nagelschmiedshütte 8**
**D-5000 Köln 40(DE)**

(54) **Turbomolekularpumpe.**

(57) Die Erfindung bezieht sich auf ein Verfahren zum Betrieb einer Turbomolekularpumpe mit einer Welle (6), mit ölgeschmierten Wälzlagern (11, 12) für diese Welle, mit einem Ölkreislauf und mit einer in den Ölkreislauf eingebauten Ölförderpumpe (14), die von einem Elektromotor angetrieben wird; eine dosierte Ölzufuhr zu den Lagern (11, 12) der Welle (6) wird dadurch erreicht, daß die Ölförderpumpe (14) zyklisch ein- und abgeschaltet wird.

EP 0 342 515 A2

# Turbomolekularpumpe

Die Erfindung bezieht sich auf ein Verfahren zum Betrieb einer Turbomolekularpumpe mit einer Welle, mit ölgeschmierten Wälzlagern für diese Welle, mit einem Ölkreislauf und mit einer in den Ölkreislauf eingebauten Ölförderpumpe, die von einem Elektromotor angetrieben wird. Außerdem bezieht sich die vorliegende Erfindung auf eine für dieses Betriebsverfahren geeignete Turbomolekularpumpe.

Turbomolekularpumpen der hier betroffenen Art sind Vakuumpumpen, die nach Art einer Turbine arbeiten. Sie weisen einen Rotor und einen Stator auf, die jeweils mit Rotor- bzw. Statorschaufelreihen ausgerüstet sind. Die Rotoren drehen sehr schnell, bis 40.000 Umdrehungen/min. und mehr. Probleme sind immer wieder mit der Lagerung der Rotorwelle verbunden.

Es sind die verschiedensten Lagerprinzipien bekannt. Magnetlager haben den Vorteil, schmiermittelfrei zu arbeiten; sie sind allerdings sehr kostenaufwendig. Fettgeschmierte Wälzlager haben den Vorteil, daß die Turbomolekularpumpe lageunabhängig ist; die Versorgung der Lager für die schnelldrehende Rotorwelle mit Fett über eine längere Zeit macht jedoch immer noch Schwierigkeiten. Eine Ölumlaufschmierung ist demgegenüber relativ einfach. Es besteht jedoch immer noch das Problem, den Lagern der Rotorwelle genau diejenige Ölmenge zuzuführen, die sie benötigen.

Die Wälzlager einer schnell drehenden Turbomolekularpumpe benötigen relativ kleine Ölmengen, z. B. 2 bis 3 Tropfen/min. Eine kontinuierliche Zufuhr derart geringer Ölmengen erfordert Zuführungsleitungen mit sehr kleinen Durchmessern oder Drosseln mit sehr feinen Düsenquerschnitten. Bei Durchmessern bzw. Querschnitten dieser Art besteht die große Gefahr, daß diese sich infolge der Verschmutzung des Öls zusetzen. Lagerschäden aufgrund ungenügender Ölversorgung sind deshalb immer wieder aufgetreten.

Der vorliegenden Erfindung liegt die Aufgabe zugrunde, ein Verfahren der eingangs genannten Art anzugeben, bei dem die geschilderten Nachteile nicht mehr auftreten.

Erfindungsgemäß wird diese Aufgabe dadurch gelöst, daß der Antriebsmotor der im Ölkreislauf befindlichen Ölförderpumpe zyklisch ein- und abgeschaltet wird. Überraschenderweise hat sich gezeigt, daß es nicht erforderlich ist, die Lager der schnelldrehenden Rotorwelle kontinuierlich mit Öl zu versorgen. Die Lagerumgebung und das Lager selbst bilden quasi einen Speicher, aus dem für relativ lange Zeiten eine ausreichende Ölzufuhr zum Lager stattfindet. Trotz relativ langer Unterbrechungen der Ölzufuhr ist eine Ölversorgung sichergestellt, so daß Lagerschäden nicht auftreten.

Zweckmäßig sind die Abschaltzeiten 3 bis 10 mal, vorzugsweise 5 mal, größer als die Einschaltzeiten, wobei die Einschaltzeiten zweckmäßig eine Größenordnung von etwa einer Minute haben. Generell sind die Einschaltzeiten jedoch konstruktionsbedingt. Sie hängen nicht nur von der Zeit ab, in der die Ölzufuhr zu den Lagern erfolgt, sondern auch von der Zeit, die das Öl benötigt, um nach dem Einschalten der Ölpumpe zum Lager oder zu den Lagern zu gelangen.

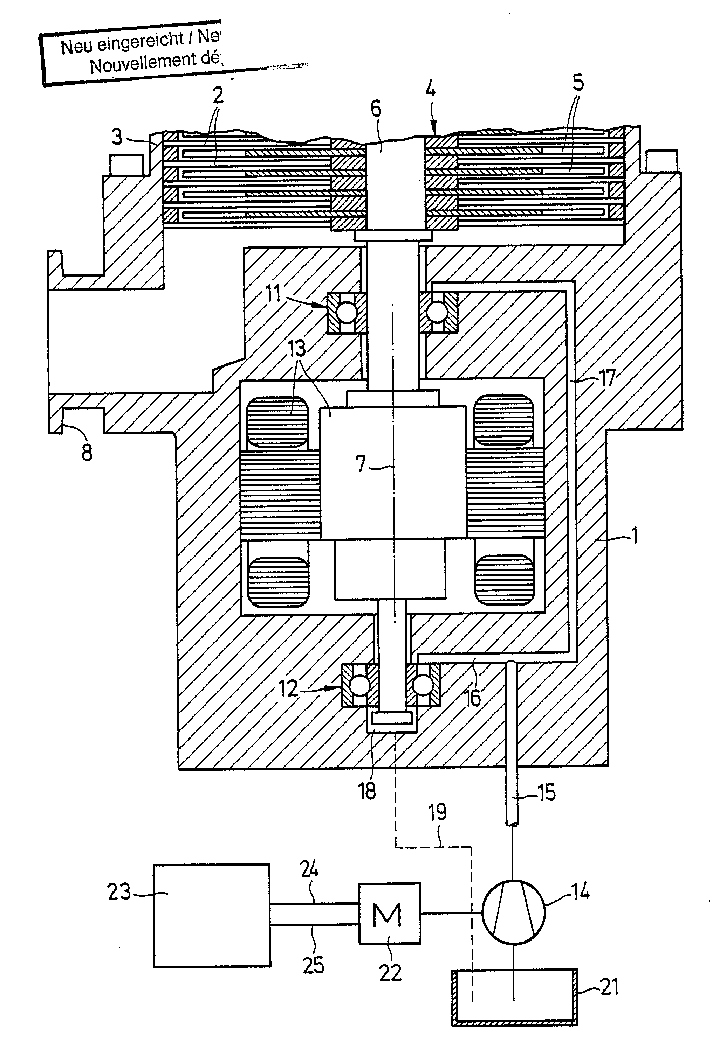

Weitere Vorteile und Einzelheiten der Erfindung sollen anhand eines in der Figur dargestellten Ausführungsbeispieles erläutert werden.

Die Figur zeigt eine nur teilweise dargestellte Turbomolekularpumpe mit ihrem Gehäuse 1, dem mit den Statorschaufeln 2 ausgerüsteten Stator 3 und dem Rotor 4 mit den Rotorschaufeln 5. Bestandteil des Rotors 4 ist die Welle 6 mit ihrer Achse 7. An der Welle 6 sind die Rotorschaufeln 5 befestigt. Rotor 4 und Stator 3 sind nur teilweise dargestellt. Die Statorschaufeln 2 und Rotorschaufeln 5 sind derart angestellt, daß eine Gasförderung vom nicht dargestellten Einlaß zum Auslaß 8 bewirkt wird.

Die Rotorwelle 6 ist im Gehäuse 1 der Turbomolekularpumpe mittels der Wälzlager 11 und 12 drehbar gelagert. Zwischen diesen Wälzlagern 11, 12 befindet sich der Antriebsmotor 13.

Den ölgeschmierten Wälzlagern 11 und 12 ist ein Ölkreislauf zugeordnet, der die Ölförderpumpe 14 umfaßt. Von der Ölförderpumpe 14 gelangt das Öl in eine Hauptleitung 15, die zum Teil von einer Bohrung im Gehäuse 1 der Turbomolekularpumpe gebildet wird. Die Hauptleitung 15 verzweigt sich in Leitungen 16 und 17, die zu den Lagern 11 bzw. 12 führen. Das von den Lagern abgegebene Öl fließt infolge der Schwerkraft nach unten in einen Ölsammelraum, der über die Ölrückführungsleitung 19 mit einer Ölwanne 21 in Verbindung steht. Zweckmäßig bildet der Ölsammelraum 18 gleichzeitig die Ölwanne 21, aus der die Ölförderpumpe 14 das umströmende Öl aufnimmt.

Der Motor der Ölförderpumpe 14 ist mit 22 bezeichnet. Er wird ein- und abgeschaltet von einer Steuereinheit 23, die über die Steuerleitungen 24 und 25 mit dem Motor 22 verbunden ist.

Die dargestellte Ausführungsform ermöglicht ein zyklisches Betreiben der Ölförderpumpe 14. Mittels der Steuereinheit 23 wird der Motor 22 ein- bzw. ausgeschaltet. Das Öl kann den Lagern 11 und 12 schwallartig für kurze Zeiten zugeführt werden. Es ist dann nicht mehr erforderlich, die Leitungen 15, 16 und 17 mit kleinen Durchmessern oder Düsen auszurüsten. Bei Lagerungen, die nur wenige Tropfen Öl pro Minute benötigen, besteht die Möglichkeit, den Ölbedarf für mehrere Minuten innerhalb eines kurzen Zeitraumes, von z. B. einer Minute, zuzuführen und dann die Ölförderpumpe 14 abzuschalten. Die Abschaltzeit kann das drei- bis zehnfache, vorzugsweise das fünffache, der Einschaltzeit betragen. Dabei gilt für die Einschaltzeit, daß zunächst die Ölleitungen 15. 16 und 17 gefüllt werden müssen, ehe das Öl zu den Lagern 11, 12 gelangt. Die Zeitspanne, in der eine Ölzufuhr zu den Lagern 11 und 12 tatsächlich stattfindet, ist also etwas kleiner als die eigentliche Einschaltzeit. Da die Ölförderpumpe 14 nicht ständig betrieben werden muß und auch nicht gegen einen relativ hohen , von Düsen verursachten Druck arbeiten muß, wird ihre Lebensdauer verlängert.

**Ansprüche**

1. Verfahren zum Betrieb einer Turbomolekularpumpe mit einer Welle, mit ölgeschmierten Wälzlagern für diese Welle, mit einem Ölkreislauf und mit einer in den Ölkreislauf eingebauten Ölförderpumpe, die von einem Elektromotor angetrieben wird, dadurch gekennzeichnet, daß der Antriebsmotor der Ölförderpumpe zyklische ein- und abgeschaltet wird.

2. Verfahren nach Anspruch 1, dadurch gekennzeichnet, daß die Abschaltzeiten länger sind als die Einschaltzeiten.

3. Verfahren nach Anspruch 2, dadurch gekennzeichnet, daß die Abschaltzeiten zwei- bis zehnmal, vorzugsweise fünfmal, länger sind als die Einschaltzeiten.

4. Verfahren nach Anspruch 3, dadurch gekennzeichnet, daß die Einschaltzeit ca. 1 Minute beträgt.

5. Turbomolekularpumpe mit einer Welle, mit ölgeschmierten Wälzlagern für diese Welle, mit einem Ölkreislauf und mit einer in den Ölkreislauf eingebauten Ölförderpumpe, die von einem Elektromotor angetrieben wird, dadurch gekennzeichnet, daß dem Antriebsmotor (22) der Ölpumpe (14) eine elektrische Schaltung (23) zum zyklischen Ein- und Ausschalten zugeordnet ist.